Europäisches Patentamt

European Patent Office

Office européen des brevets

(19)

(11) Veröffentlichungsnummer: **0 295 303**
**A1**

## (12) EUROPÄISCHE PATENTANMELDUNG

veröffentlicht nach Art. 158 Abs. 3 EPÜ

(21) Anmeldenummer: 87902866.0

(51) Int. Cl.⁴: **A 01 G 9/00**

(22) Anmeldetag: **29.01.87**

Daten der zugrundeliegenden internationalen Anmeldung:

(86) Internationale Anmeldenummer:
**PCT/SU 87/00012**

(87) Internationale Veröffentlichungsnummer:
**WO 88/04887 (14.07.88 88/15)**

(30) Priorität: **25.12.86 SU 4163085**

(43) Veröffentlichungstag der Anmeldung: **21.12.88**
**Patentblatt 88/51**

(84) Benannte Vertragsstaaten: **AT BE CH DE FR GB IT LI NL
SE**

(71) Anmelder: **NAUCHNO-PROIZVODSTVENNOE
OBIEDINENIE PO SELSKOKHOZYAISTVENNOMU
MASHINOSTROENIJU NPO VISKHOM, Dmitrovskoe
shosse, 107, Moscow, 127247 (SU)**

(72) Erfinder: **LIPOV, Jury Noievich, ul. Vavilova, 56-2-167,
Moscow, 117296 (SU)**
Erfinder: **DORONIN, Vladimir Petrovich, ul.
V.Latsisa, 37-24, Moscow, 123514 (SU)**

(74) Vertreter: **Finck, Dieter et al, Patentanwälte v. Füner,
Ebbinghaus, Finck Mariahilfplatz 2 & 3,
D-8000 München 90 (DE)**

(54) **VORRICHTUNG ZUR VORBEREITUNG DES BODENS IN EINEM GEWÄCHSHAUS.**

(57)  Die Maschine zur Zubereitung von Gewächshauserdgemischen enthält einen Dosierbunker (2), eine Mischkammer (7) und einen Entladeförderer (14), die auf einem gemeinsamen Rahmen (1) montiert sind.

Die Mischkammer (7) befindet sich unter dem Dosierbunker (2), derart, dass ihr Rotor (9) entlang der Längsachse des beweglichen Bunkerbodens liegt. Unmittelbar unter Endschaufeln (12) des Rotors (9) ist eine Austrittsöffnung (13) der Mischkammer (7) angeordnet.

MASCHINE ZUR ZUBEREITUNG VON
GEWÄCHSHAUSERDGEMISCHEN

## Technisches Gebiet

Die vorliegende Erfindung bezieht sich auf das Gebiet der Landwirtschaft, insbesondere auf eine Maschine zur Zubereitung von Nähr-Erdgemischen aus mehreren Komponenten.

Derartige Erdgemische können zum Anbau von Gemüse- und Blumenkulturen sowie von Champignons angewendet werden.

## Zugrundeliegender Stand der Technik

Zur Zeit sind mehrere Maschinentypen zur Zubereitung von Gewächshauserdgemischen bekannt.

Bekannt sind beispielsweise bunkerlose Maschinen, die eine Mischkammer mit Einfüll- und Austragöffnungen, einem im Innern der Kammer montierten Schaufelrotor (Schneche), sowie einen Entladeförderer enthält. Mittels vorgesehener Beschickungsvorrichtungen werden die im voraus volumendosierten Komponenten durch die Einfüllöffnung hindurch in die Mischkammer zugeführt, wo die Komponenten vom Schaufelrotor (von Schnecken) zerkleinert, vermischt und an die Austragöffnung zum Entladeförderer transportiert werden.

Ein Nachteil dieses Maschinentyps besteht in der Ungenauigkeit der Volumenverhältnisse der Komponenten, weil deren Einfüllen in die Mischkammer aus einer vorher gebildeten schichtweise angelegten Miete erfolgt, aus der mit einem Lader eine Portion in der gesamten Schichthöhe entnommen wird und daher ein genaues Komponentenverhältnis praktisch nicht eingehalten werden kann.

Bekannt sind ferner Einbunkermaschinen zur Zubereitung von Gewächshauserdgemischen, die einen Speicherbunker mit Rollboden, eine Mischkammer mit Einfüll- und Austragöffnungen und im Innern derselben angebrachter Brech- und Mischtrommel (Brech- und Mischtrommel) sowie einen Entladeförderer enthalten.

Die Komponenten des Erdgemisches werden in den Speicherbunker schichtweise eingeschüttet und mittels einer Fördereinrichtung in die Mischkammer zugeführt, wo sie zerkleinert, vermischt und durch die Austragöffnung hindurch auf den Entladeförderer übergeben werden.

Ein Nachteil dieses Maschinentyps besteht ebenso wie bei bunkerlosen Maschinen in einer grösseren Streuung von Komponentenverhältnissen, weil diese Komponenten in den Speicherbunker schichtweise praktisch unkontrolliert eingeschüttet werden.

Bekannt ist ferner eineMehrbunkermaschine zur Zubereitung von Gewächshauserdgemischen (SU, A, 882479), die mehrere Dosierbunker mit beweglichem Boden und ein System von Förderern enthält, die die Ausgangskomponenten an die Einfüllöffnung der Mischkammer transportieren, in deren Innerem ein Schaufelrotor untergebracht ist, der die Komponenten zerkleinert und vermischt sowie das erzeugte Gemisch an die Austragöffnung zum Entladefördern befördert. In der Einfüllöffnung der Mischkammer ist ein Siebwerx montiert, das die Abtrennung von gröberen Fremdeinschlüssen gewährleistet.

Die Dosierbunker sind über dem Beschickungsförderer seitlich und an der Stirnseite angeordnet. Die in die Dosierbunker geladenen Komponenten werden mittels beweglicher Böden über Schiebervorrichtungen auf den Beschickungsförderer gebracht, von wo sie durch die Einfüllöffnung hindurch und über das Siebwerx in die Mischkammer gelangen.

In der Mischkammer werden die Komponenten vom Schaufelrotor zerkleinert, vermischt und an die Austragöffnung der Mischkammer zum Entladeförderer transportiert. Vom Entladeförderer gelangt das Gemisch in die vorgesehenen Transportmittel bzw. in die Miete.

Ein Nachteil der bekannten Maschine besteht in ihrem hohen Metallanteil und grossen Abmessungen, weil für eine jede Gemischkomponente ine eigener Dosierbunker mit Einzelantrieb und Rahmen vorgesehen und ferner in der Maschine ein Beschickungsförderer eingebaut ist, der ein Verbindungsglied zwischen den Dosierbunkern und der Mischkammer darstellt, dessen Zwechmässigkeit aber zweifelhaft ist.

## Offenbarung der Erfindung

Das Ziel der vorliegenden Erfindung ist die Beseitigung der vorerwähnten Nachteile der bekannten Maschinen ähnlicher Zweckbestimmung.

Der Erfindung liegt die Aufgabe zugrunde, eine solche Maschine zur Zubereitung von Gewächshauserdgemischen zu schaffen, in der die Zusammenlegung mehrerer auszuführender technologischer Operationen möglich ist, welche die Herstellung von qualitätsgerechten Erdgemischen aus zwei bzw. mehreren Komponenten sowie eine Herabsetzung des spezifischen Metallbedarfs dank konstruktiver Ausführung der Maschine und einer Verringerung ihrer Abmessungen gewährleisten.

Die gestellte Aufgabe ist dadurch gelöst, dass in der Maschine zur Zubereitung von Gewächshauserdgemischen, die einen Dosierbunker mit beweglichem Boden einschliesst, welcher die Ausgangskomponenten an die Einfüllöffnung einer Mischkammer befördert, in deren Innerem ein Schaufelrotor untergebracht ist, der das zu vermischende Komponentengemisch an die Austrittsöffnung zu einem Entladeförderer transportiert, erfindungsgemäss der Dosierbunker, die Mischkammer und der Entladeförderer auf einem gemeinsamen Maschinenrahmen solcherweise montiert sind, dass sich die Mischkammer unter dem Dosierbunker befindet und ihr Rotor entlang der Längsachse des beweglichen Bunkerbodens liegt, während unmittelbar unter den Endschaufeln des Rotors die Austrittsöffnung der Mischkammer angeordnet ist.

Zweckmässigerweise ist in der Einfüllöffnung der Mischkammer an deren zur Umlaufrichtung des Rotors antgegengesetzter Wand ein Gemischanfeuchter angebracht.

Es ist wünschenswert, dass die Endschaufeln des Rotors entgegen den übrigen Schaufeln desselben gekehrt sind.

Eine der Ausführungsformen der Erfindung sieht vor, dass die Längsachse des Entladeförderers rechtwinklig zur Längsachse des Dosierbunkers engeordnet ist.

Diese Ausführung der Maschine gestattet is insgesamt, ihren minimalen Metallbedarf dank Verringerung ihrer Abmessungen sicherzustellen sowie das gewünschte Erdgemisch in der maximal sparsamen Weise zuzubereiten.

Das Wesen der Erfindung besteht in folgendem.

Die durchgeführten theoretischen und experimentalen Untersuchungen haben gezeigt, dass eine mehrschichtige Volumendosierung von Erdgemischkomponenten in einem einheitlichen Dosierbunker, die Zusammenlegung von mehreren gleichzeitig durchgeführten technologischen Operationen in einem einheitlichen Aggregat sowie die Montage des Dosierbunkers, der Mischkammer und des Entladeförderers auf einem gemeinsamen Rahmen in konstruktiver Hinsicht möglich sind und dank Verringerung der Abmessungen von Rahmenbaugruppen und Reduzierung der Anzahl von Dosierbunkern und verbindenden Fördereinrichtungen der Metallbedarf der tragenden Konstruktion im ganzen beträchtlich verringert werden kann. Die auf einem gemeinsamen Rahmen montierten Dosierbunker, Mischkammer und Entladeförderer gewährleisten darüber hinaus eine leichte Bedienung der Maschine und bequeme Beschickung des Dosierbunkers mit verschiedenen Komponenten, erhöhen dazu die technologische Zuverlässigkeit der Maschine.

Der in der Einfüllöffnung befestigte Gemischanfeuchter, der wie erwähnt an der Einfüllöffnungswand angebracht ist, gegen welche die Rotorschaufeln die Teilchen der zu vermischenden Komponenten schleudern, weshalb es zu deren Ansammlung in der Einfüllöffnung und Verstopfung eines Teiles des Siebwerxes kommt, gewährleistet das Abspülen der Teilchen, wobei er gleichzeitig zwei Funktionen – Anfeuchtung des Erdgemisches und Reinigung der Einfüllöffnung von demselben-erfütt.

Die Anordnung der Endschaufeln des Rotors entgegen den übrigen Schaufeln desselben gekehrt gewährleistet einen intensiveren Austritt des Gemisches aus der Austrittsöffnung der Mischkammer und erzeugt zugleich einen Gegenstrom von Gemischteilchen, wodurch eine zusätzliche Vermischung der Komponenten sichergestellt wird.

Die Montage des Entladeförderers auf dem gemeinsamen Maschinenrahmen in der Weise, dass seine Längsachse zur Längsachse des Dosierbunkers rechtwinklig ist, gewährleistet den erforderlichen Betriebsmomfort sowie den rationellsten konstruktiven Aufbau der Maschine.

Die Anwendung der Erfindung gestattet es, die Zubereitung von Gewächshauserdgemischen aus zwei und mehr Komponenten bei hoher Qualität der Volumendosierung, Zerkleinerung und Vermischung der Komponenten praktisch zu gewährleisten.

Eine hohe Zubereitungsqualität der Nähr-Erdgemische wirkt sich auf die Ertragfähigkeit der auf ihnen angebauten Kulturen günstig aus. So wird beispielsweise beim Champignonanbau die Ertragfähigkeit bis um 5 % erhöht.

Die Erfindung gestattet es, eine hinsichtlich ihrer Abmessungen kompaktere und einen gegenüber der ähnlichen Maschinenklasse geringeren (bis um 30 %) Metallbedarf aufweisende Maschine zu schaffen.

Kurze Beschreibung der Zeichnungen

Nachstehend ist die Beschreibung einer konkreten Ausführung der vorliegenden Erfindung unter Bezugnahme auf beigefügte Zeichnungen angeführt, in denen es zeigt:

Fig. 1 eine Maschine zur Zubereitung von Gewächshauserdgemischen gemäss der Erfindung, im Längsschnitt;

Fig. 2 dasselbe, Seitenansicht von der Mischkammer
her;

Fig. 3 die Einfüllöffnung der Mischkammer mit dem
darin angebrachten Gemischanfeuchter, Draufsicht.


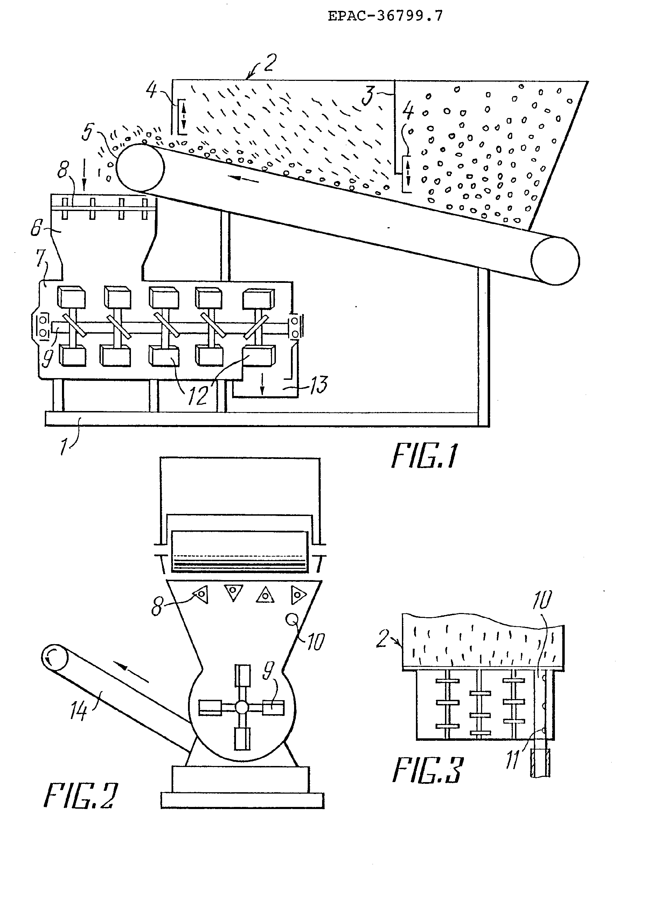

Beste Ausführungsform der Erfindung

Die Maschine zur Zubereitung von Gewächshauserdgemischen enthält einen einheitlichen tragenden Ganzmetallrahmen 1, auf dem ein Dosierbunker 2 für zu dosierende Komponenten befestigt ist, die in eine der durch
eine Trennwand 3 gebildeten Sektionen eingeschüttet
werden.

Der Bunker 2 besitzt Schieber 4, die zur Volumendosierung der Komponenten durch deren Öffnen um einen
bestimmten Höhenbetrag bestimmt sind, sowie einen beweglichen Boden, der auf eine beliebige bekannte Weise,
beispielsweise in Gestalt eines Förderers 5, ausgeführt
sein kann.

Der bewegliche Boden des Dosierbunkers 2 ist geneigt
mit Anstieg nach der Seite der Einfüllöffnung 6 einer
Mischkammer 7 hin zur Verminderung der durch die Komponenten hervorgerufenen Druckkräfte an den Quertrennwänden des Dosierbunkers angeordnet. Die Mischkammer 7
ist auf dem Rahmen 1 befestigt und befindet sich unter
dem Dosierbunker 2. Im oberen Teil der Einfüllöffnung 6
ist ein Komponentensieb 8, im Innern der Mischkammer 7
aber ein Rotor 9 untergebracht, der entlang der Längsachse des beweglichen Bodens des Dosierbunkers 2 angeordnet ist. Zwischen dem Rotor 9 und dem Sieb 8 ist
näher an das letztere ein Anfeuchter 10 montiert, der an
der zur Umlaufrichtung des Rotors 9 entgegengesetzten
Wand (Ohne Bezugszahlbezeichnung) der Einfüllöffnung 6
befestigt ist. Der Anfeuchter 10 kann beispielsweise
als Rohrleitung ausgeführt sein, deren Oberfläche eine
Lochung 11 aufweist. Durch die Lochung hindurch fliesst unter Druck stehendes Wasser zu, das die Wände der Einfüllöffnung bespült und die Komponenten anfeuchtet. Am Rotor 9 sind Schaufeln 12 montiert, die längs Schraubenführungen angeordnet sind und eine mehrgängige unterbrochene Schnecke bilden, die eine qualitätsgerechte Vermischung der Komponenten und deren Verschiebung entlang der Kammer 7 zu einer Austrittsöffnung 13 gewährleistet. Die Endschaufeln 12 des Rotors 9 sind entgegen seinen übrigen Schaufeln 12 gekahrt und liegen unmittelbar über der Austrittsöffnung 13 der Mischkammer 7. Diese Ausführung der Endschaufeln des Rotors verhindert das Anhaften der Teilchen an der Stirnwand der Mischkammer und gewährleistet einen intensiveren Austritt des Gemisches aus derselben auf einen Entladeförderer 14. Der Entladeförderer 14 ist auf dem Rahmen 1 befestigt, und seine Längsachse ist rechtwinklig zur Längsachse des Dosierbunkers 2 angeordnet.

Die Maschine arbeitet folgenderweise.

Gemäss der vorgesehenen Technologie wird mit Hilfe der Schieber 4 in der Höhe der Schichten das erforderliche Volumenverhältnis der Komponenten eingestellt, die in die Sektionen des Dosierbunkers 2 eingeschüttet werden. Eine Komponente mit höherem Volumengewicht wird in die in Bezug auf die Mischkammer ferne Sektion des Dosierbunkers eingeschüttet. Es wird der Antrieb des Förderers 5 eingeschaltet und die dosierte Komponentenschicht bis zur Einfüllöffnung 6 vorwärtsgeschoben. Danach wird die andere Sektion des Dosierbunkers mit der unteren Komponente beschickt. Die Ausgangskomponenten werden mittels der Schieber schichtweise in der Höhe dosiert und gelangen also in Gestalt eines "Blätterteigkuchens" in die Einfüllöffnung 6 der Mischkammer 7.

Im weiteren geschieht das Sieben, Anfeuchten, Vermischen des Komponentengemisches gemäss den vorgesehenen technologischen Betriebsvorschriften. Sofern die Komponenten aufgebracht werden, erfolgt deren Nachschütten in die Bunkersektionen. Das zubereitete Gewächshauserdgemisch wird mit Hilfe des Entladeförderers in ein Transportmittel bzw. in eine Miete übertragen.

Beim Zubereiten von mehrkomponentigen, biespielsweise aus drei Komponenten bestehenden Gemischen wird der technologische Prozess auf die folgende Weise durchgeführt. Das gewonnene zweikomponentige Substrat (Gemisch) wird in eine der Bunkersektionen geladen, während in die andere Sektion eine dritte Komponente geladen wird. Mit Hilfe der vorhandenen Schieber wird ein Volumenverhältnis der Komponenten eingestellt, und der weitere Prozess geht ähnlich dem Prozess vonstatten, der für den Fall der Zubereitung eines zweikomponentigen Gemisches beschrieben wurde.

### Gewerbliche Verwertbarkeit

Die Erfindung kann in sämtlichen Landwirtschaftszweigen angewendet verden, die sich mit dem Anbau von landwirtschaftlichen Kulturen auf künstlich zubereiteten Erdsubstraten befassen.

Die breiteste Anwendung kann die Erfindung zum Unterglasanbau finden, bei dem verschiedene Nähr-Erdgemische zum Anbau von Gemüse, Blumen, Pilzen verwendet verden.

Die erfindungsgemässe Maschine zur Zubereitung von Gewächshauserdgemischen ist für die Anwendung in den Gewächshauskombinaten am zweckmässigsten, die Unterglasflächen von 1 bis 6 ha besitzen.

- 9 -

PATENTANSPRÜCHE

1. Maschine zur Zubereitung von Gewächshauserdgemischen, die einen Dosierbunker (2) mit beweglichem Boden einschliesst, welcher die Ausgangskomponenten zur Einfüllöffnung (6) der Mischkammer (7) befördert, in deren Innerem ein Schaufelrotor (9) untergebracht ist, der das zu vermischende Komponentengemisch an die Austrittsöffnung (13) der Kammer (7) zu einem Entladeförderer (14) transportiert, dadurch g e k e n n z e i c h n e t, dass der Dosierbunker (2), die Mischkammer (7) und der Entladeförderer (14) auf einem gemeinsamen Maschinenrahmen (1) solscherweise montiert sind, dass sich die Mischkammer (7) unter dem Dosierbunker (2) befindet und ihr Rotor (9) entlang der Längsachse des beweglichen Bodens des Bunkers (2) liegt, während unmittelbar unter Endschaufeln (12) des Rotors (9) die Austrittsöffnung (13) der Mischkammer (7) angeordnet ist.

2. Maschine nach Anspruch 1, dadurch g e k e n n z e i c h n e t, dass in der Einfüllöffnung (6) der Mischkammer (7) an deren zur Umlaufrichtung des Rotors (9) entgegengesetzter Wand ein Gemischanfeuchter (10) befestigt ist.

3. Maschine nach Anspruch 1, dadurch g e k e n n z e i c h n e t, dass die Endschaufeln (12) des Rotors (9) entgegen den übrigen Schaufeln (12) desselben gekehrt sind.

4. Maschine nach Anspruch 1, dadurch g e k e n n z e i c h n e t, dass die Längsachse des Entladeförderers (14) rechtwinklig zur Längsachse des Dosierbunkers (2) angeordnet ist.

EPAC-36799.7

FIG.1

FIG.2

FIG.3

# INTERNATIONAL SEARCH REPORT

International Application No PCT/SU 87/00012

## I. CLASSIFICATION OF SUBJECT MATTER (if several classification symbols apply, indicate all) *

According to International Patent Classification (IPC) or to both National Classification and IPC

IPC$^4$     A 01 G 9/00

## II. FIELDS SEARCHED

### Minimum Documentation Searched [7]

| Classification System | Classification Symbols |
|---|---|
| IPC$^4$ | A01G 9/00, 9/10 A01C 15/00 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | A.V. Goloulin "Novye mashiny dlya melchan-izatsii ovoschevodstva v zaschischennom grunte", 1974, Vysshaya shkola (Moscow), see page 45, figure 13 | 1 |
| A | SU, Al, 1135446, (Zaporozhsky konstruktorsko-tekhnologichesky institut po mashinam dlya podgotovki vnesenia v pochvu mineralnykh udobreny), 23 January 1985 (23.01.85), see the claims, figure 1 | 1 |
| A | SU, Al, 882479, (Vsesojuzny ordena Trudovogo Krasnogo Znameni nauchno-issledovatelsky institut selskokhozyaistvennogo mashinostroenia im V.P. Goryachkina) 23 November 1981 (23.11.81), see the claims, figures | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 May 1987 (27.05.87) | 03 July 1987 (03.07.87) |

| International Searching Authority | Signature of Authorized Officer |
|---|---|
| ISA/SU | |

Form PCT/ISA/210 (second sheet) (January 1985)